# EUROPEAN PATENT SPECIFICATION

(11) **EP 2 851 585 B1**
(45) Date of publication and mention of the grant of the patent: **13.04.2016**
(21) Application number: 13184979.6
(22) Date of filing: 18.09.2013
(51) Int. Cl.: F16H 61/00, F04B 7/00, F16H 59/00, F04B 49/00

(54) **Hydraulic transmission and method of controlling hydraulic transmission**
Hydraulikgetriebe und Verfahren zur Steuerung eines Hydraulikgetriebes
Transmission hydraulique et procédé de commande d'une transmission hydraulique

(43) Date of publication of application: 25.03.2015
(73) Proprietor: ARTEMIS INTELLIGENT POWER LIMITED, Loanhead EH20 9TB (GB); MITSUBISHI HEAVY INDUSTRIES, Ltd., Tokyo 108-8215 (JP)
(72) Inventor: Caldwell, Niall, Loanhead, EH20 9TB (GB)
(74) Representative: Hindle, Alistair Andrew

(56) References cited:
- US-A1- 2007 258 832
- US-A1- 2008 294 318
- US-A1- 2011 269 597
- US-A1- 2013 221 676

## Description

### Field of the invention

The invention relates to the field of hydraulic transmissions including a variable displacement pump and a variable displacement motor, at least one of which uses electronically controlled valves to determine the net displacement of working fluid by each cylinder of the pump or motor on each cycle of cylinder working volume. The invention concerns methods for selecting the net displacement of working fluid on each cycle of cylinder working volume to meet a desired displacement demand.

### Background to the invention

Hydraulic transmissions are employed for a variety of technical applications, for example in vehicle transmissions, or in renewable power generation apparatus, such as wind turbine generators. In a wind turbine generator, for example, the turbine rotor drives a hydraulic pump which pressurises working fluid which is communicated through a manifold to one or more hydraulic motors, each of which drives an electrical generator.

Variable displacement hydraulic pumps and motors in which the volume of working fluid displaced by each cylinder, on each cycle of cylinder working volume, can be selected by the control of electronically controlled valves, in phased relation to cycles of cylinder working volume, are known from EP0361927 and EP0494236, for example. In machines of that type, each cycle of cylinder working volume may carry out an inactive cycle, in which there is no net displacement of working fluid, or an active cycle, in which there is a net displacement of working fluid. Although in EP0361927 and EP0494236, there are only two choices, no net displacement of working fluid or the maximum stroke volume of working fluid, EP 1537333 discloses an embodiment in which only part of the maximum stroke volume of working fluid is displaced during at least some cycles of cylinder working volume.

A hydraulic transmission and a method of operating a hydraulic pump or a hydraulic motor in a hydraulic transmission according to the preamble of claims 1 and 15 is known from US 2013/0221676 A1.

The invention seeks to provide improved control methods and algorithms for controlling machines of that type, which are suitable for use in a hydraulic transmission. Some embodiments of the invention concern control methods and algorithms for controlling machines of that type in which some of the cylinders have substantially the same phase as each other throughout cycles of cylinder working volume.

### Summary of the invention

According to a first aspect of the present invention there is provided a hydraulic transmission, comprising:
a variable displacement hydraulic pump,
a variable displacement hydraulic motor,
a drive shaft coupled to the hydraulic pump, for driving the hydraulic pump,
and an output shaft coupled to the hydraulic motor, for coupling to a load,
wherein at least one of the hydraulic pump and the hydraulic motor comprises:
   a rotatable shaft, a shaft position sensor which senses the angular position of the rotatable shaft;
   at least one ring cam having one or more lobes,
   a plurality of cylinders arranged around the rotatable shaft and having working volumes which vary cyclically with rotation of the rotatable shaft,
   a low pressure working fluid line and a high pressure working fluid line,
   a plurality of valves regulating the flow of working fluid between each said cylinder and the low and high pressure working fluid lines, at least one said valve associated with each cylinder being an electronically controlled valve,
   a controller configured to actively control the said electronically controlled valves to thereby determine the net displacement of working fluid by each cylinder on each cycle of cylinder working volume,
   wherein the controller is configured to repeatedly execute a displacement determination algorithm, when the rotatable shaft is at angularly spaced positions, to thereby determine the net displacement of working fluid by each cylinder on each cycle of cylinder working volume,
   wherein the algorithm takes into account a displacement demand (Demand), and the difference between previous values of the displacement demand (Demand) and previous net displacements determined by the controller (Displacement(k)), to match the time averaged net displacement of working fluid by the cylinders to the time averaged displacement represented by the displacement demand (Demand).

Accordingly, the net displacement of working fluid is matched to a displacement demand (Demand) which can be selected depending on the requirements of the hydraulic transmission although there can be a little short term difference between the two due to the time averaging. The displacement demand (Demand) might be selected to obtain a desired torque in the rotatable shaft, to increase or decrease the speed of rotation of the rotatable shaft, to increase or decrease the pressure in the high pressure line, or for any other purpose. The displacement demand (Demand) may be received from a hydraulic transmission controller.

The controller may comprise a processor (such as a microprocessor or microcontroller) which is programmed to execute the displacement determination algorithm. The processor is typically in electronic communication with a solid state memory which stores a program which, when executed on the processor, causes the controller to execute the displacement determination algorithm. However, some or all of the displacement determination algorithm may be implemented as electronic circuitry.

Execution of the displacement determination algorithm is typically triggered responsive to the angular position of the rotatable shaft. The displacement determination algorithm should be executed between decision points, being times by when displacement decisions concerning the net displacement of working fluid by one or more cylinders (Displacement (k)) must be made in order to determine whether the respective one or more cylinders execute active cycles in which they make a net displacement of working fluid or inactive cycles in which they make no net displacement of working fluid, by actively controlling electronically controlled valves. If all of the plurality of cylinders remain at different points in their cycles of cylinder volume at all times, the decision points for each cylinder all take place at different times (at different angular positions of the rotatable shaft). However, in embodiments where there are a plurality of cylinders which have substantially the same working volume throughout cycles of cylinder working volume, the decision points for the plurality of cylinders may occur at substantially the same time (at substantially the same angular position of the rotatable shaft). The displacement determination algorithm can be executed just before or at each decision point, or between each decision point.

The displacement demand (Demand) may be received from outside the controller, through a displacement demand input. Alternatively, the displacement demand (Demand) may be generated by the controller.

The shaft position sensor may measure the position of the rotatable shaft at each of a plurality of orientations. The shaft position sensor may measure the position of a component which has a position that is coupled to the orientation of the rotatable shaft, for example, the position of a piston. The shaft position sensor may infer the shaft position between measurements of position, for example by measuring the position of the shaft at only one, or a small number (e.g. 2, 3 or 4) different orientations and determining an estimate of shaft speed of rotation and/or rate of change of speed of rotation, from consecutive measurements to thereby estimate instantaneous shaft position. The rotatable shaft may comprise a rotary encoder, for example using a Gray Code, which is read by the shaft position sensor.

Typically, the controller stores a displacement error value (Error (k)) and execution of the displacement determination algorithm takes into account the stored displacement error value (Error (k)) and updates the displacement error value (calculates Error (k+1)) by adding the displacement demand (Demand) and subtracting the net displacement of working fluid determined during execution of the displacement determination algorithm (Displacement (k)).

One skilled in the art will appreciate that the displacement error value (Error (k)) may take the form of a variable which is updated or a series (e.g. an array) of variables which are updated sequentially. The displacement error value (Error (k)) may be updated (to calculate Error (k+1)) by adding the displacement demand (Demand), during an individual execution of the displacement determination algorithm, before or after the determining the net displacement of working fluid by a cylinder (Displacement (k)).

It may be that the controller stores an accumulated displacement value (Accumulated Displacement (k)) representative of previously determined net displacements of working fluid by the one or more cylinders (Displacement (k)) and updates the accumulated displacement value by adding the displacement determined by execution of the displacement determination algorithm (Displacement (k+1)),
and wherein the controller stores an accumulated displacement demand value (Accumulated Demand (k)), and updates the accumulated displacement demand value (Accumulated Displacement (k)) by adding the displacement represented by the displacement demand (Demand),
wherein execution of the displacement determination algorithm takes into account the difference between the accumulated displacement value (Accumulated Displacement (k)) and the accumulated displacement demand value (Accumulated Demand (k))

One skilled in the art will appreciate that the accumulated displacement value (Accumulated Displacement (k)) may take the form of a variable which is updated or a series (e.g. an array) of variables which are updated in turn. Similarly, the accumulated displacement demand value (Accumulated Demand (k)) may take the form of a variable which is updated or a series (e.g. an array) of variables which are updated in turn. The step of updating the accumulated displacement demand value (Accumulated Demand (k)) may take place before or after determination of the net displacement (Displacement (k)) of working fluid by a cylinder.

It may be that at least one ring cam has a plurality of lobes and some or all of the plurality of cylinders form a group of cylinders which are in driving relationship with the same ring cam, wherein for each of the group of cylinders, there is at least one other cylinder in the said group of cylinders having substantially the same working volume throughout cycles of cylinder working volume.

The group of cylinders may be a subset of the plurality of cylinders. The group of cylinders may be all of the plurality of cylinders.

Typically, the cylinders in the group of cylinders are in driving relationship with the same ring cam, and the said ring cam has a plurality of lobes, such that for each cylinder in the group of cylinders, there is another cylinder which has substantially the same working volume throughout cycles of cylinder working volume.

By in driving relationship we mean either the cylinders are driven by rotation of the ring cam (in the case of a hydraulic pump) or drive the rotation of the ring cam (in the case of a hydraulic motor).

It may be that the group of cylinders in driving relationship with the same ring cam comprise A cylinders, the ring cam has B lobes and the number of cylinders having substantially the same working volume throughout cycles of cylinder working volume (the redundancy, C) is the greatest common divisor of A and B.

Typically, the cylinders in the group of cylinders are distributed around the rotatable shaft such that the relative phase of the cycles of working volume of the cylinders in the group are evenly distributed. The cylinders in a group of cylinders may be evenly distributed around the rotatable shaft.

It may be that the group of cylinders consists of a number (D, the phase number) of sets of the same number (C, the redundancy) of cylinders having substantially the same working volume throughout cycles of cylinder working volume, and the control means selects whether each cylinder in a said set of cylinders should undergo an active or an inactive cycle on a given cycle of working chamber cylinder volume at a single decision point.

The decision points for each set of cylinders having substantially the same working volume throughout cycles of cylinder working volume take place when the cylinder working volume is at a predetermined phase and therefore when the rotatable shaft is at one or more predetermined orientations.

It may be that the cylinders in the group of cylinders are driven by one or more cams having a number (B), which is greater than one, of lobes, and wherein the number of decision points per revolution of the rotatable shaft (E) is B x D.

It may be that the group of cylinders are a bank of cylinders which are in driving relationship with the same ring cam through ring cam following elements which are at substantially the same axial position.

The ring cam following elements may for example be piston shoes, piston rollers, or pivots to which piston driving rods are coupled. By axial position we refer to the position of a projection onto the axis of rotation of the rotatable shaft.

It may be that the cylinders in the bank of cylinders have substantially the same axial position. Although the cylinders in the same bank will typically have the same axial position, it is the axial position of the ring cam following elements which is of most concern.

It may be that the plurality of cylinders comprises a plurality of banks of cylinders, each bank of cylinders being in driving relationship with a ring cam through ring cam following elements which are at substantially the same axial position, each bank of cylinders being independently controlled.

It may be that the plurality of banks of cylinders are in each in driving relationship with a different ring cam, each ring cam being coupled to the rotating shaft.

As well as the said plurality of cylinders, there may be further cylinders which are also arranged around the rotatable shaft and also have working volumes which vary cyclically with rotation of the rotatable shaft, connected to a different low pressure line which is not in fluid communication with the said low pressure line, or to a different high pressure line which is not in fluid communication with the said high pressure line. The further cylinders may therefore deliver working fluid to or receive working fluid from a different working function. For example, a single hydraulic pump may have a plurality of separate independently controlled outputs for driving different hydraulic motors. The further cylinders may be controlled in the same way, using one or more different displacement demands and separately monitoring previous net displacements by the further cylinders.

Typically, the controller determines for each cycle of cylinder working volume whether the respective cylinder should undergo an active cycle, in which there is a net displacement of working fluid by the cylinder (i.e. the determined net displacement is greater than zero) or an inactive cycle in which there is no net displacement of working fluid (i.e. the determined net displacement is zero). Typically, the controller determines that at least when the said at least one of the hydraulic pump or the hydraulic motor is working at less than maximum possible displacement per revolution of the rotatable shaft, at least some cycles of cylinder working volume are inactive cycles. Typically, for at least a range of displacement demands (Demand), the controller determines there should be only inactive cycles or active cycles during each of which the same net displacement (Displacement (k)) is determined. Typically, for at least a range of displacement demands (Demand), the controller determines there should be only inactive cycles or active cycles during each of which the maximum net displacement of working fluid by a cylinder is determined (Displacement (k) has it's maximum value). In some embodiments, during at least some active cycles, the controller determines that a cylinder should make a net displacement which is a fraction (i.e. a proportion which is greater than 0 but less than 1) of the maximum net displacement by a cylinder during that active cycle (O<Displacement(k)<maximum displacement). Typically, the controller only determines that a cylinder should make a net displacement which is a fraction of the maximum net displacement by a cylinder during an active cycle when the displacement demand (Demand) is below a threshold which is less than the maximum displacement of the said at least one of the hydraulic pump and the hydraulic motor. Typically, where the controller determines that a cylinder should undergo an active cycle in which it makes a net displacement which is a fraction of the maximum net displacement by a cylinder during an active cycle (for example, when the displacement demand is within a predetermined range), active cycles in which a cylinder undergoes an active cycle in which it makes a net displacement which is a fraction of the maximum net displacement by a cylinder during an active cycle are interspersed with at least some inactive cycles or at least some active cycles in which the maximum net displacement by a cylinder during an active cycle is selected. There may be a range of values of the displacement demand (Demand) at which inactive cycles, active cycles in which the maximum net displacement by a cylinder and active cycles in which a fraction of the maximum net displacement are interspersed.

The step of determining the net displacement of working fluid by a cylinder (Displacement (k)) may take into account one or more of: whether a cylinder is disabled, reducing side load on the bearings which support the rotating shaft or distributing load between the cylinders.

It may be that the displacement determination algorithm is executed a plurality of times between decision points, being times by when displacement decisions concerning the net displacement of working fluid by one or more cylinders must be made in order to determine whether the respective one or more cylinders execute active cycles in which they make a net displacement of working fluid or inactive cycles in which they make no net displacement of working fluid, to sequentially determine the net displacement (Displacement (k)) of working fluid by each of a plurality of cylinders having substantially the same volume throughout cycles of cylinder working volume.

Typically, the decision points for each cylinder having substantially the same volume take place at substantially the same time (when the rotating shaft is at substantially the same angular position). The displacement determination algorithm may be executed sequentially for each cylinder having substantially the same volume between decision points (e.g. just before a decision point).

It may be that the displacement determination algorithm first determines the number of a set of cylinders which have substantially the same working volume throughout cycles of cylinder working volume that should undergo active cycles in which there is a net displacement of working fluid at substantially the same time and then determines the net displacement of working fluid in the next cycle of cylinder working volume of each of the cylinders in the set.

For example, if the cylinders have a redundancy of three, the displacement determination algorithm may first determine whether one, two or three of the cylinders in a set of three cylinders which have the same phase should undergo active cycles at a decision point, and then determine which of the three cylinders should undergo active cycles.

It may be that the displacement determination algorithm determines which of the cylinders in the set should undergo an active cycle in which they make a net displacement of working fluid, thereby determining the net displacement of working fluid in the next cycle of cylinder volume by each of the cylinders in the set.

It may be that the controller is configured to take into account whether a cylinder is disabled when determining the net displacement of the respective cylinder.

Where it is found that a cylinder is disabled, the displacement determination algorithm executed by the controller may determine that the net displacement by the disabled cylinder should be zero.

A cylinder may be disabled because it is determined that it, or a component associated with it, or another cylinder which typically undergoes active cycles at the same time, is broken, or at risk of breaking. The controller may be in electronic communication with memory which stores data, for each cylinder, which indicates whether that cylinder is disabled. The controller may be configured to determine whether each of the cylinders should be disabled.

It may be that the step of determining which of the cylinders in the set should undergo an active cycle takes into account one or more of: whether a cylinder is disabled, reducing side load on the bearings which support the rotating shaft or distributing load between the cylinders.

The controller may maintain a record of the total number of occasions on which each of the plurality of cylinders has carried out an active cycle. For example, the controller may be in electronic communication with memory storing data concerning the number of occasions on which each of the plurality of cylinders has carried out an active cycle.

The rotatable shaft is, or is coupled to, the drive shaft in the case of a hydraulic pump. The rotatable shaft is, or is coupled to, the output shaft in the case of a hydraulic motor. A bank of cylinders is arranged around the rotatable shaft, either inside or outside of at least one ring cam. The rotatable shaft may be coupled to the ring cam so that the cylinders are fixed and the ring cam and rotatable shaft rotate relative to the cylinders. Alternatively, the rotatable shaft may be coupled to the cylinders so that the cylinders and rotatable shaft rotate while the ring cam remains stationary.

The hydraulic transmission typically comprises a high pressure working fluid line through which working fluid is delivered from the hydraulic pump to the hydraulic motor and a high pressure working fluid line through which working fluid is delivered to the hydraulic pump from the hydraulic motor (typically via a tank).

The invention extends to a wind turbine generator comprising a hydraulic transmission according to the first aspect of the invention, a plurality of turbine blades mounted to a hub, the hub coupled to the drive shaft, and an electricity generator coupled to the output shaft.

The invention may also extend to a vehicle comprising a hydraulic transmission according to the first aspect of the invention, an engine (e.g. an electrical motor or internal combustion engine) coupled to the drive shaft and a wheel or hydraulic actuator coupled to the output shaft.

The invention extends in a second aspect to a method of operating a hydraulic pump or a hydraulic motor in a hydraulic transmission, the hydraulic transmission comprising:
a variable displacement hydraulic pump,
a variable displacement hydraulic motor,
a drive shaft coupled to the hydraulic pump, for driving the hydraulic pump, and
an output shaft coupled to the hydraulic motor, for coupling to a load,
wherein at least one of the hydraulic pump and the hydraulic motor comprises:
   a rotatable shaft,
   a shaft position sensor which senses the angular position of the rotatable shaft;
   at least one ring cam having one or more lobes,
   a plurality of cylinders arranged around the rotatable shaft and having working volumes which vary cyclically with rotation of the rotatable shaft,
      a low pressure working fluid line and a high pressure working fluid line, a plurality of valves regulating the flow of working fluid between each cylinder and the low and high pressure working fluid lines, at least one said valve associated with each cylinder being an electronically controlled valve,
wherein the said at least one of a hydraulic pump and a hydraulic motor is operated by actively controlling the said electronically controlled valves to thereby determine the net displacement of working fluid by each cylinder on each cycle of cylinder working volume, and wherein a controller repeatedly executes a displacement determination algorithm, when the shaft is at angularly spaced positions, thereby determining the net displacement of working fluid by each cylinder on each cycle of cylinder working volume,
wherein the displacement determination algorithm takes into account a displacement demand (Demand), and the difference between previous values of the displacement demand (Demand) and previously determined net displacements of working fluid by each cylinder (Displacement (k)), to match the time averaged net displacement of working fluid by the cylinders to the time averaged displacement represented by the displacement demand (Demand).

Typically, the controller determines for each cycle of cylinder working volume whether the respective cylinder should undergo an active cycle, in which there is a net displacement of working fluid by the cylinder (i.e. the determined net displacement (Displacement (k)) is greater than zero) or an inactive cycle in which there is no net displacement of working fluid (i.e. the determined net displacement (Displacement (k)) is zero). Typically, the controller determines that at least when the said at least one of the hydraulic pump or the hydraulic motor is working at less than maximum possible displacement, at least some cycles of cylinder working volume are inactive cycles. Typically, for at least a range of displacement demands (Demand), the controller determines there should be only inactive cycles or active cycles during each of which the same net displacement is determined. Typically, for at least a range of displacement demands (Demand), the controller determines there should be only inactive cycles or active cycles during each of which the maximum net displacement of working fluid by a cylinder is determined. In some embodiments, during at least some active cycles, the controller determines that a cylinder should make a net displacement (Displacement (k)) which is a fraction (i.e. a proportion which is greater than 0 but less than 1, or percentage greater than 0 % but less than 100 %) of the maximum net displacement by a cylinder during that active cycle. Typically, the controller only determines that a cylinder should make a net displacement (Displacement (k)) which is a fraction of the maximum net displacement by a cylinder during an active cycle when the displacement demand (Demand) is below a threshold which is representative of a demand which is less than the maximum displacement of the said at least one of the hydraulic pump and the hydraulic motor per revolution of the rotatable shaft. Typically, where the controller determines that a cylinder should undergo an active cycle in which it makes a net displacement which is a fraction of the maximum net displacement by a cylinder during an active cycle (for example, when the displacement demand is within a predetermined range), active cycles in which a cylinder undergoes an active cycle in which it makes a net displacement which is a fraction of the maximum net displacement by a cylinder during an active cycle are interspersed with at least some inactive cycles or at least some active cycles in which the maximum net displacement by a cylinder during an active cycle is selected. There may be a range of values of the displacement demand (Demand) at which inactive cycles, active cycles in which the maximum net displacement by a cylinder and active cycles in which a fraction of the maximum net displacement are interspersed.

The controller may actively control the said electronically controlled valves by one or more of actively opening a valve, actively closing a valve, actively holding a valve open (e.g. until it is desired to close) or actively holding a valve closed (e.g. until it is desired to open). Typically, the controller actively controls the said electronically controlled valves in phased relationship to cycles of cylinder volume. The said at least one of the hydraulic pump and the hydraulic motor typically comprises a shaft position sensor to measure the orientation of the rotatable shaft and the controller receives a shaft position signal from the shaft position sensor to thereby actively control the said electronically controlled valves in phased relationship to cycles of cylinder volume.

Typically each cylinder has a piston mounted therein and coupled to the respective ring cam so that the working volume of the cylinder (the volume occupied by working fluid in use between the cylinder and the piston) varies cyclically with rotation of the rotatable shaft. The number of cycles of cylinder working volume per rotation of the rotatable shaft equals the number of lobes of the respective ring cam. If there are a plurality of ring cams, they may have different numbers of lobes.

The cylinders having substantially the same working volume throughout cycles of cylinder working volume may have the same working volume as each other throughout cycles of cylinder working volume, however some small variation around this is acceptable, and may even be preferable to even out forces. Thus, the cylinders having substantially the same working volume throughout cycles of cylinder working volume typically have cycles of working volume which have a phase difference of less than 10°, less than 5° or less than 2°.

The hydraulic transmission may comprise a plurality of variable displacement hydraulic pumps. The hydraulic transmission may comprise a plurality of variable displacement hydraulic motors. The or each variable displacement hydraulic pump may be a variable displacement fluid working machine which is operable as either a motor or a pump in alternative operating modes, but which is normally operated as a pump. The or each variable displacement hydraulic motor may be a variable displacement fluid working machine which is operable as either a motor or a pump in alternative operating modes, but which is normally operated as a motor.

Features disclosed in relation to the first or second aspect of the invention are optional features of both the first and second aspect.

### Description of the Drawings

An example embodiment of the present invention will now be illustrated with reference to the following Figures in which:
Figure 1 is a schematic diagram of a hydraulic transmission, which is part of a wind turbine generator;
Figure 2 is a schematic diagram of the hydraulic motor of the transmission of Figure 1;
Figure 3 is a schematic diagram of the controller of the hydraulic motor;
Figure 4 is a flow diagram of the operation of the transmission controller;
Figure 5 is a flow diagram of a displacement determination algorithm for determining the displacement by individual cylinders;
Figures 6A and 6B are tables illustrating repetitive execution of the displacement determination algorithm;
Figure 7 is a schematic diagram of the hydraulic pump of the transmission of Figure 1
Figure 8 is a table illustrating one approach to determining the displacement of redundant cylinders;
Figure 9 is a flow diagram of the execution of a displacement determination algorithm by the hydraulic motor controller; and
Figure 10 is a table illustrating repetitive execution of the displacement determination algorithm of Figure 9.

### Detailed Description of an Example Embodiment

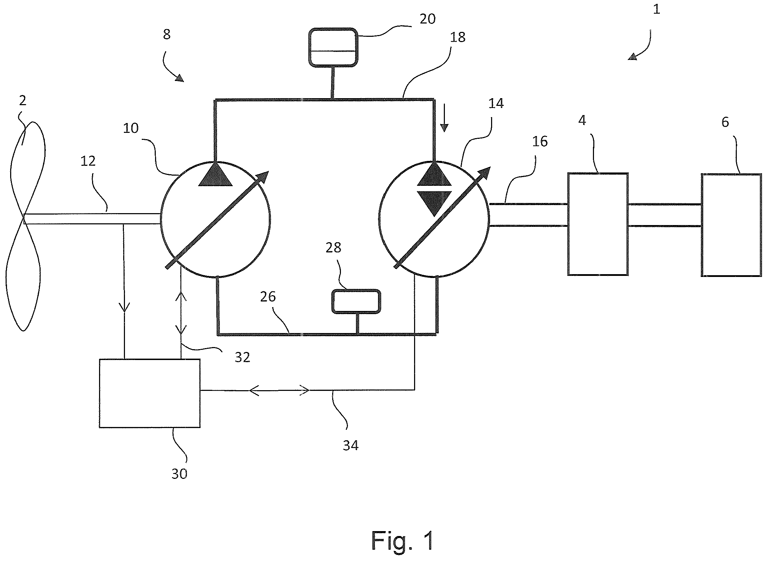

Figure 1 schematically illustrates a wind turbine generator (1) comprising a variable-pitch turbine (2) and a synchronous electrical generator (4). The electrical generator (4) is connected to a 3-phase grid (6) (typically operating at 50 Hz or 60 Hz). Wind energy from the turbine (2) is transmitted to the electrical generator (4) through a hydraulic transmission (8). The hydraulic transmission includes a variable-displacement hydraulic pump (10) drivably connected to the turbine by a driveshaft (12), and a variable-displacement hydraulic motor (14) connected to the rotor of the electrical generator by a further drive shaft (16). Further details of the variable-displacement hydraulic pump (10) and motor (14) are discussed below.

A pressurised fluid manifold (18) extends from the outlet of the hydraulic pump to the inlet of the hydraulic motor and connects to the high pressure line of each of the hydraulic pump and hydraulic motor. In some embodiments, it extends to the inlet of a plurality of hydraulic motors, connected in parallel, each of which may independently drive a separate generator. The pressurised fluid manifold (18) is also in communication with an oleopneumatic accumulator (20), which functions as a reservoir for working fluid. The oleopneumatic accumulator is precharged with a relatively high pressure of inert gas, usually at least 100 bar, and further pressurised inert gas may also be held in gas bottles fluidically connected thereto. The pump (10) and motor (14) are also coupled to a low pressure manifold (26) via respective low pressure valves (not shown). The low pressure manifold also extends to a reservoir tank or low pressure accumulator (28) for hydraulic working fluid and functions in use to direct working fluid from the outlet of the hydraulic motor(s) to the inlet of the hydraulic pump.

A transmission controller (30) regulates the hydraulic transmission. In particular, it transmits displacement demand control signals (32, 34) to the hydraulic pump and the hydraulic motor, each of which have their own controller. Data received by the transmission controller includes at least a measurement of the speed of rotation of the rotor, and typically also the speed of rotation of the generator shaft and the pressure in the high pressure manifold. There may also be feedback from the hydraulic pump and motor as to the instantaneous displacement of each of the pump and the motor, which, along with the rate of change of the speed of rotation of the generator shaft and the speed of rotation of the rotor, enables the instantaneous torque in the turbine drive shaft (12) and the generator drive shaft (16) to be determined. Other possible inputs include external control signals, a wind speed signal from an anemometer, information concerning properties of an electrical load (e.g. electrical grid) to which the electricity generator is connected, and so forth. Other possible outputs include controls to start and stop, connect or disconnect the electricity generator, command signals to a blade pitch actuator and so forth.

One skilled in the art will appreciate that the transmission controller and the controllers of the hydraulic pump and/or hydraulic motor could be combined, or indeed further distributed.

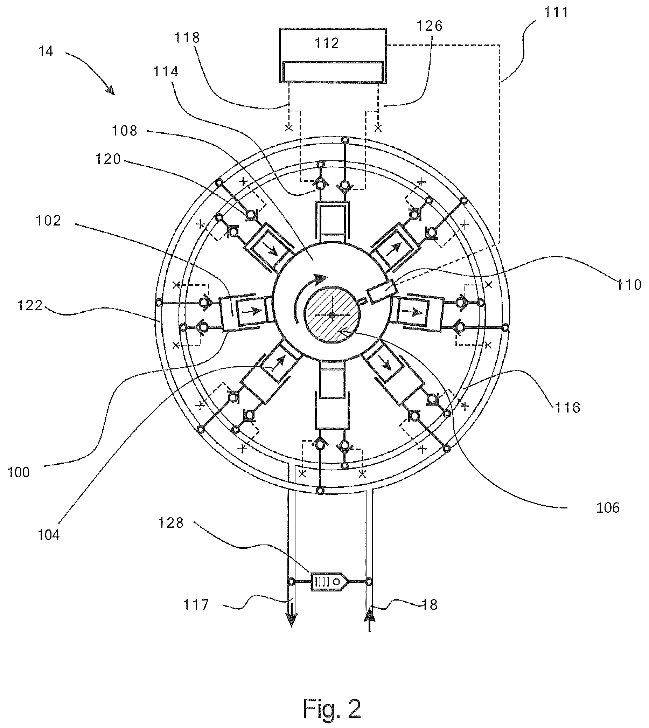

Figure 2 illustrates the hydraulic motor (14) in the form of an electronically commutated hydraulic pump/motor comprising a plurality of cylinders (100) which have working volumes (102) defined by the interior surfaces of the cylinders and pistons (104) which are driven from a rotatable shaft (106) by an eccentric cam (108) and which reciprocate within the cylinders to cyclically vary the working volume of the cylinders. The rotatable shaft is firmly connected to and rotates with the generator shaft (16). In this example, all of the cylinders are located in a single bank at the same axial position along the rotatable shaft. A shaft position and speed sensor (110) determines the instantaneous angular position and speed of rotation of the shaft, and through signal line (111) informs the motor controller (112), which enables the motor controller to determine the instantaneous phase of the cycles of each cylinder.

The cylinders are each associated with Low Pressure Valves (LPVs) in the form of electronically actuated face-sealing poppet valves (114), which face inwards toward their associated cylinder and are operable to selectively seal off a channel extending from the cylinder to a low pressure conduit (116), which functions generally as a net source or sink of fluid in use and may connect one or several cylinders, or indeed all as is shown here, to a low pressure line (117) which is fluidically connected to the low pressure manifold (26) of the WTG. The LPVs are normally open solenoid closed valves which open passively when the pressure within the cylinder is less than or equal to the pressure within the low pressure manifold, i.e. during an intake stroke, to bring the cylinder into fluid communication with the low pressure manifold, but are selectively closable under the active control of the controller via LPV control lines (118) to bring the cylinder out of fluid communication with the low pressure manifold. Alternative electronically controllable valves may be employed, such as normally closed solenoid opened valves.

The cylinders are each further associated with High Pressure Valves (HPVs) (120) in the form of pressure actuated delivery valves. The HPVs open outwards from the cylinders and are operable to seal off a channel extending from the cylinder to a high pressure line (122), which functions as a net source or sink of fluid in use and may connect one or several cylinders, or indeed all as is shown here, to a high pressure port (124, acting as the inlet of the hydraulic motor) which is in fluid communication with the high pressure manifold (18). The HPVs function as normally-closed pressure-opening check valves which open passively when the pressure within the cylinder exceeds the pressure within the high pressure manifold. The HPVs also function as normally-closed solenoid opened check valves which the controller may selectively hold open via HPV control lines (126) once that HPV is opened by pressure within the associated cylinder. Typically the HPV is not openable by the controller against pressure in the high pressure manifold. The HPV may additionally be openable under the control of the controller when there is pressure in the high pressure manifold but not in the cylinder, or may be partially openable, for example if the valve is of the type and is operated according to the method disclosed in WO 2008/029073 or WO 2010/029358.

In a normal mode of operation described in, for example, EP 0 361 927, EP 0 494 236, and EP 1 537 333, the contents of which are hereby incorporated herein by way of this reference, the motor controller selects the net rate of displacement of fluid from the high pressure manifold by the hydraulic motor by actively closing one or more of the LPVs shortly before the point of minimum volume in the associated cylinder's cycle, closing the path to the low pressure manifold which causes the fluid in the cylinder to be compressed by the remainder of the contraction stroke. The associated HPV opens when the pressure across it equalises and a small amount of fluid is directed out through the associated HPV. The motor controller then actively holds open the associated HPV, typically until near the maximum volume in the associated cylinder's cycle, admitting fluid from the high pressure manifold and applying a torque to the rotatable shaft. In an optional pumping mode the controller selects the net rate of displacement of fluid to the high pressure manifold by the hydraulic motor by actively closing one or more of the LPVs typically near the point of maximum volume in the associated cylinder's cycle, closing the path to the low pressure manifold and thereby directing fluid out through the associated HPV on the subsequent contraction stroke (but does not actively hold open the HPV). The controller selects the number and sequence of LPV closures and HPV openings to produce a flow or create a shaft torque or power to satisfy a selected net rate of displacement (displacement demand). As well as determining whether or not to close or hold open the LPVs on a cycle by cycle basis, the controller is operable to vary the precise phasing of the closure of the HPVs with respect to the varying cylinder volume and thereby to select the net rate of displacement of fluid from the high pressure to the low pressure manifold or vice versa.

Arrows on the ports (117,18) indicate fluid flow in the motoring mode; in the pumping mode the flow is reversed. A pressure relief valve (128) may protect the hydraulic motor from damage.

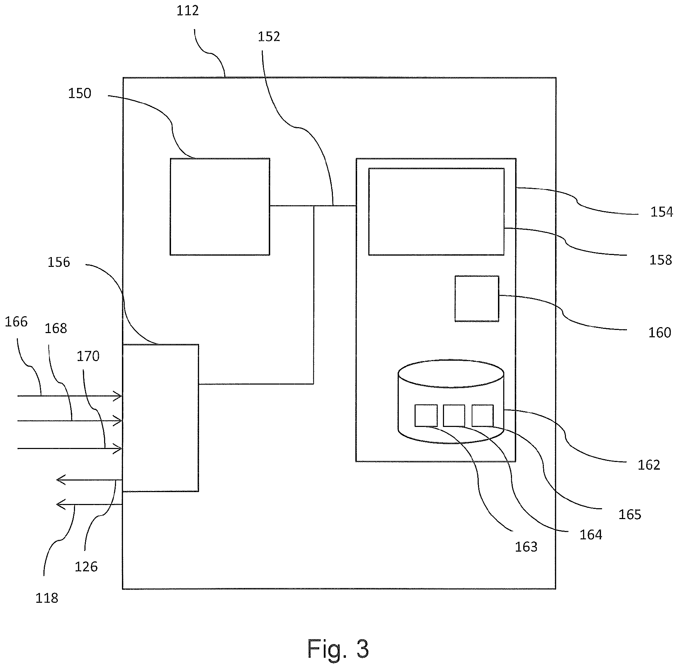

Figure 3 is a schematic diagram of motor controller (112). The structure of the pump controller corresponds. A processor (150), such as a microprocessor or microcontroller, is in electronic communication through a bus (152) with memory (154) and an input-output port (156). The memory stores a program (158) which implements execution of a displacement determination algorithm which determines the net volume of working fluid to be displaced by each cylinder on each cycle of cylinder working volume (Displacement (k)), as well as one or more variables (160) which store an accumulated displacement error value (Error (k)) and a database (162) which stores data concerning each cylinder, such as the angular position of each cylinder (163) and whether or not it is disabled (164). In some embodiments, the database stores the number of times (165) each cylinder has undergone an active cycle.

The controller receives a signal representative of the displacement demand (34) (Demand), a shaft position (i.e. orientation) signal (166) and typically a measurement of the pressure (168) in the high pressure line. The outputs from the controller include high pressure valve control signals through high pressure valve control lines (126) and low pressure valve control signals through low pressure valve control lines (118). The controller aims to match the total displacement from the cylinders to the displacement demand (Demand), over time. The shaft position is required to enable valve control signals to be generated in phased relationship with cycles of cylinder working volume. The measurement of pressure can be used to determine the exact amount of working fluid displaced or in other calculations. The controller might also receive signals indicating whether cylinders are broken, and should therefore be disabled, and to enable the database (162) to be updated accordingly.

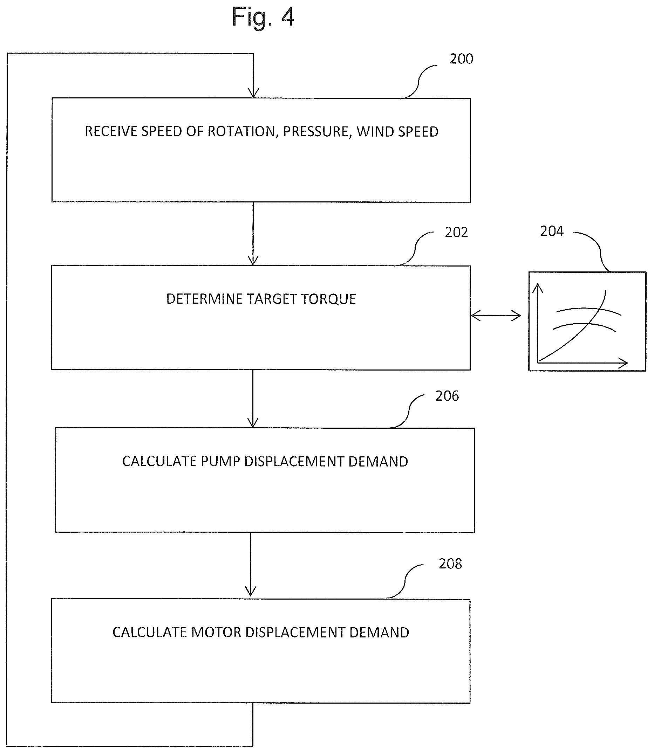

During operation of the hydraulic transmission by the process of Figure 4, the hydraulic transmission controller (30) receives (200) input signals including the speed of rotation of the turbine (2) (which is the same as, or a geared ratio of the speed of rotation of the rotatable shaft of the hydraulic pump, as the two are coupled), and the pressure in the pressurised fluid manifold (18), as well as the wind speed. The transmission controller next determines (202) a target torque to be applied to the turbine by the hydraulic pump, with reference to a look up table (204) which summarises ideal target torque and shaft rotation speed at a plurality of different wind speeds. Once a target torque has been determined the transmission controller then calculates (206) the displacement of the hydraulic pump required to obtain the target torque. Volumes of working fluid and rates of displacement may be calculated in any suitable units. This target displacement can for example be calculated as a fraction of the maximum displacement of which the hydraulic pump is capable. In this example, the displacement demand is expressed as an average percentage of the maximum output of working fluid per rotation of the rotatable shaft. The actual rate of displacement which this represents will be the product of both the average percentage of maximum displacement demand, the maximum volume which can be displaced by a cylinder, the number of cylinders and the speed of rotation of the pump rotatable shaft. The resulting torque will also be proportional to the pressure in high pressure manifold. The calculated displacement is transmitted to the hydraulic pump where it functions as the displacement demand (Demand).

Once the pump displacement has been calculated, the motor displacement can also be calculated. Again, in this example it is expressed as a fraction of maximum output of working fluid per cylinder. Typically, the motor displacement is calculated to generate electricity with optimum efficiency. However, a number of other factors may be taken into account. For example, the motor displacement can be varied in order to vary the pressure in the pressured fluid manifold, which increases when motor displacement is less than the displacement by the hydraulic pump, and decreases when the displacement of the hydraulic motor is greater than the displacement of the hydraulic pump. There may be other factors. For example, it may be desirable for the electricity generators to be switched between being driven at a substantially constant torque, and being switched off, to minimise winding losses and maximise the efficiency of electricity generation. The calculated motor displacement is transmitted to the hydraulic motor where it functions as the displacement demand (Demand).

In this example embodiment, the hydraulic motor has the configuration of Figure 2, in which the cam which drives the pistons has a single lobe, and so there is a single cycle of cylinder working volume per rotation of the rotatable shaft of the hydraulic motor.

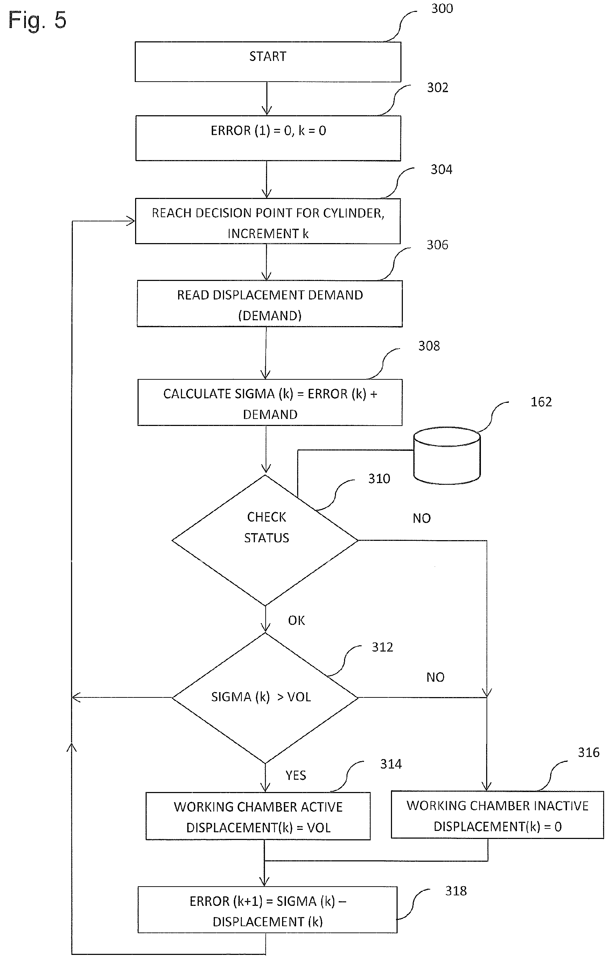

Figure 5 illustrates the procedure carried out by the hydraulic motor to determine the net displacement by each cylinder sequentially. The procedure begins (300), whereupon a stored variable Error (k) (160) is set (302) to zero. The variable Error(k) stores the difference between previous value of the displacement demand (Demand) and previous net displacement determined by the controller (Displacement (k)).

The rotatable shaft of the hydraulic motor then rotates until it reaches (304) a decision point for an individual cylinder and k is increased. For the example shown Figure 2, there are eight cylinders, and so each decision point will be separated by 45 degrees of rotation of the rotatable shaft. The actual period of time which arises between the decision points will therefore be the period of time required for the rotatable shaft to rotate by 45 degrees, which is inversely proportional to the speed of rotation of the rotatable shaft.

At each decision point, the motor controller reads (306) the displacement demand (Demand) received from the transmission controller. The controller then calculates (308) Sigma (k) = Error (k) plus the displacement demand (Demand). Next, the status of the cylinder which is being considered is checked (310). This is carried out with reference to the database (162, 164) of cylinder data. If it is found that the cylinder is disabled (for example because it is broken), no further action is taken for that cylinder. The method then repeats from step (304) once the decision point is reached for the next cylinder.

Alternatively, if it is found that the cylinder has not been disabled, then Sigma (k) is compared (312) with a volume of fluid to be displaced by the cylinder. This value, VOL, may simply be the maximum volume of working fluid displaceable by the cylinder, when the only options being considered are an inactive cycle with no net displacement or a full displacement active cycle in which the maximum displacement of working fluid by the cylinder is selected. However, VOL may in some circumstances be less than this maximum displacement, for example, where it is desired to carry out a partial cycle, in which only part of the maximum displacement of the cylinder is displaced.

If Sigma (k) is greater than VOL then it is determined that cylinder will undergo an active cycle, displacing a volume of working fluid equal to VOL. Alternatively, if Sigma (k) is not greater than VOL then it is determined that cylinder will be inactive on its next cycle of cylinder working volume, and will have a net displacement of zero.

Control signals are then sent to the low and high pressure valves for the cylinder under consideration to cause the cylinder to undergo an active or inactive cycle, as determined.

This step effectively takes into account the displacement demand (Demand), and the difference between previous values of the displacement demand (Demand) and previous net displacements (Displacement (k)) determined by the controller (in this case, in the form of the stored error), and then matches the time averaged net displacement of working fluid by the cylinders to the time averaged displacement represented by the displacement demand (Demand) by causing a cylinder to undergo an active cycle in which it makes a net displacement of working fluid, if Sigma (k) exceeds the volume of a displacement (314). In that case, the value of the displacement error (Error (k)) is set as Sigma (k) minus the displacement by the active cylinder (Displacement (k)).

The value of the displacement error (Error (k)) (160) is then updated, and Error (k+1) is set to Sigma (k) minus the determined displacement (Displacement (k)). The procedure restarts from step (304) when the decision point is reached for the next cylinder (k+1).

It can therefore be seen that the displacement error variable (Error (k)) (160) maintains a record of a difference between the displacement which has been demanded, and the displacement which has actually occurred in suitable units. On each cycle, the demanded displacement is added to the displacement error value, and the actual selected displacement is subtracted. Effectively, an active cycle takes place whenever the displacement error plus the requested displacement demand exceeds a threshold, in this case VOL.

Accordingly, on each execution of the displacement determination algorithm, the displacement error value (Error (k)) is updated by adding the by the displacement demand (Demand) and subtracting the net displacement of working fluid which is determined during execution of the algorithm (Displacement (k)).

In this way, the motor controller stores an accumulated displacement demand error (Error (k) which is updated each time the displacement determination algorithm is executed by adding the displacement demand (Demand), and the displacement determination algorithm takes into account the difference between the accumulated displacement demand and the accumulated displacement by causing there to be active cycles each time Sigma (k) exceeds a threshold.

One skilled in the art will appreciate that the effects of this displacement determination algorithm can be obtained in several ways. For example, rather than subtracting the determined displacement (Displacement (k)) from the displacement error (Error (k)), it would be possible to sum the volume of working fluid which has been demanded (Accumulated Demand (k)), and the volume of working fluid which has been displaced (Accumulated Displacement (k)), over a period of time, and determine the displacement of individual cylinders to keep the two evenly matched, for example by selecting an active cycle every time Accumulated Demand (k) minus Accumulated Displacement (k) exceeded a threshold (VOL).

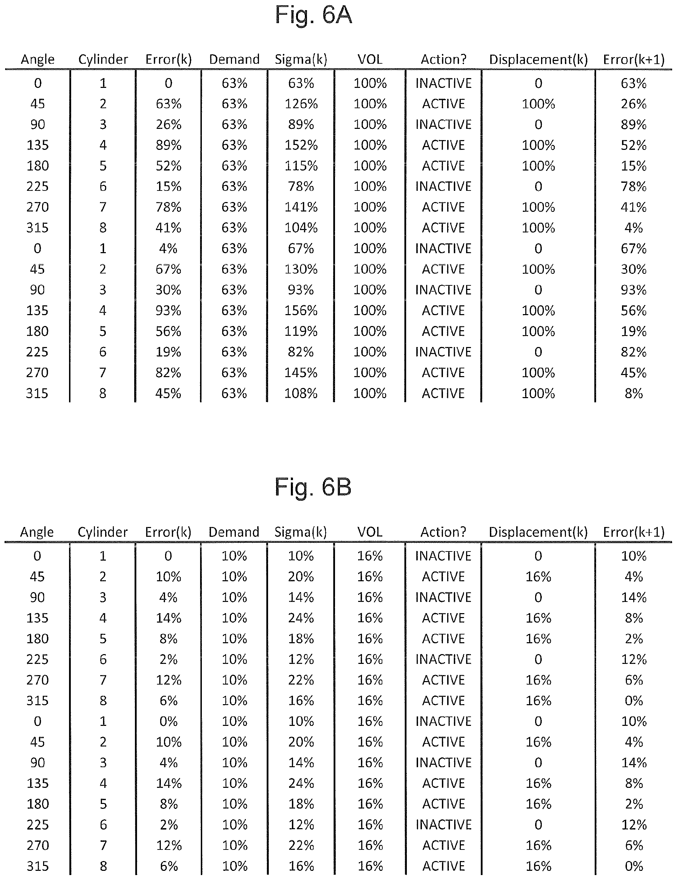

Figure 6A is a table showing an example of the variation in Error (k) and Sigma(k), and the decisions made for each cylinder in an example with eight cylinders equally spaced around a single lobe cam, where all of the active cycles have a displacement equal to the maximum displacement possible by a cylinder, and where there is a constant demand of 63% of the maximum cylinder displacement. Figure 6B is another example, with the demand of 10%, when VOL = 16%, and so the volume displaced by each cylinder during an active cycle is 16% of the maximum available displacement.

The invention also extends to hydraulic transmissions in which either or both the hydraulic pump and the hydraulic motor include sets of two or more cylinders which have substantially the same volume throughout cycles of cylinder working volume. As a result, the cylinders have coincident decision points, and so depending on the displacement demand, there may be choices to which cylinder or cylinders, from amongst those in the set having the same phase throughout cycles of cylinder working volume (redundancy).

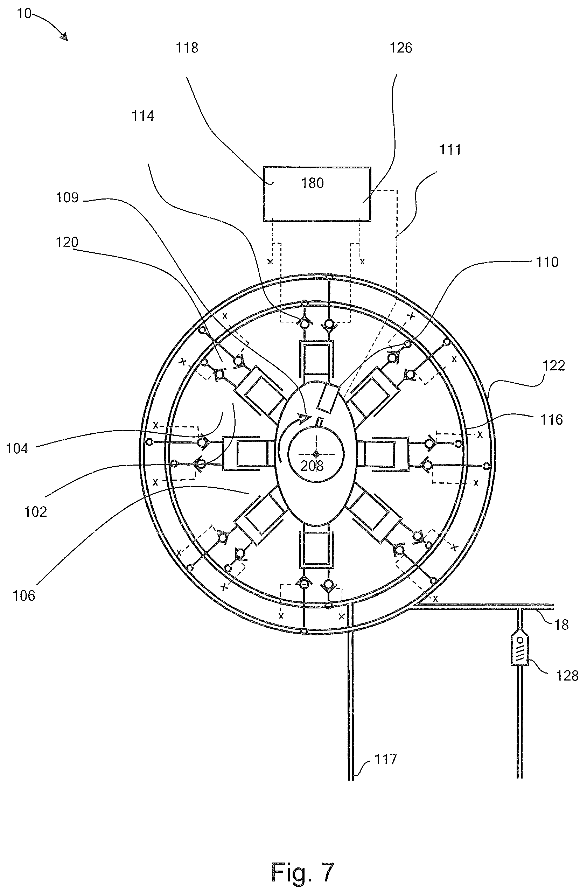

Figure 7 illustrates a hydraulic pump having redundancy. The structure of the device corresponds to the hydraulic motor illustrated with respect to Figure 2, and the pump controller (180) has a structure generally corresponding to that of the motor controller shown in Figure 3. The difference is that the cam (109), which drives the pistons, has two lobes. Accordingly, each of the eight cylinders undergoes two cycles of cylinder working volume per revolution of the cam. A pump for use in a high torque device, such as a wind turbine generator, might have many cylinders, and might adopt a ring cam with more than two lobes.

In example shown in Figure 7, there are eight cylinders and two lobes, and there is a redundancy of two. That is to say, each cylinder is a part of a set of two cylinders which are substantially in phase at all times. Therefore, they have decision points at the same angular position of the rotatable shaft and, because they can receive fluid from and deliver fluid to the same input and output, there may in some circumstances be a choice as to which cylinder may make a displacement. For example, if the pump was continuously operated at half of its maximum output capacity, then for each pair of cylinders which are in phase, it would be possible to choose which of the two cylinders carried out an active cycle in which it displaced its maximum net displacement of working fluid, to thereby meet the displacement demand (Demand).

Redundancy typically arises when there are a plurality of lobes, provided that the cylinders are distributed evenly. Redundancy can also arise because there may be a plurality of banks of cylinders, which are driven from the same cam, or which are driven from different cams, by the same rotatable shaft. In that case, even if there is only a single lobed ring cam, sets of cylinders which remain at the same cylinder working volume as each other throughout rotation of the rotatable shaft (i.e. throughout cycles of cylinder working volume).

In general, if there are A cylinders in a bank of cylinders, and they are driven by A cam having B lobes, then redundancy within that bank (C) will be the greatest common divider of A and B.

In that case there will be a number, D, of cylinders which have the same phase as each other, where D equals A/C. The number of decision points per rotation of the rotatable shaft, E, will be equal to D x B. The frequency of decision points will therefore be E times the frequency of rotation of the rotatable shaft (resolution per second).

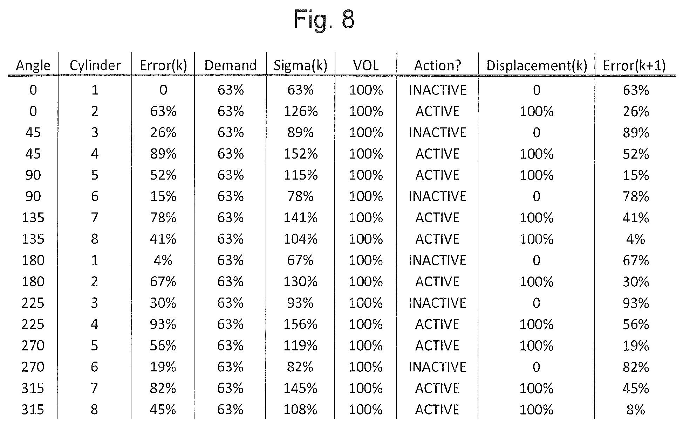

Figure 8 is a table illustrating a first approach to selecting the displacement of individual cylinders when there is redundancy. In this example, there are eight cylinders, regularly spaced about a cam having two symmetrical lobes. Accordingly, there is a redundancy of two, with geometrically opposite cylinders having the same phase throughout each cycle of cylinder working volume. Every 45° of shaft rotation there will be a decision point for two cylinders simultaneously. In this example, steps 306 to 318 are simply repeated twice, one in respect of each cylinder, at each decision point. Accordingly, except for the angle at which each decision takes place, the values of Error (k) and Sigma (k) after consecutive executions of step 306 through 318 are the same as in Figure 6A.

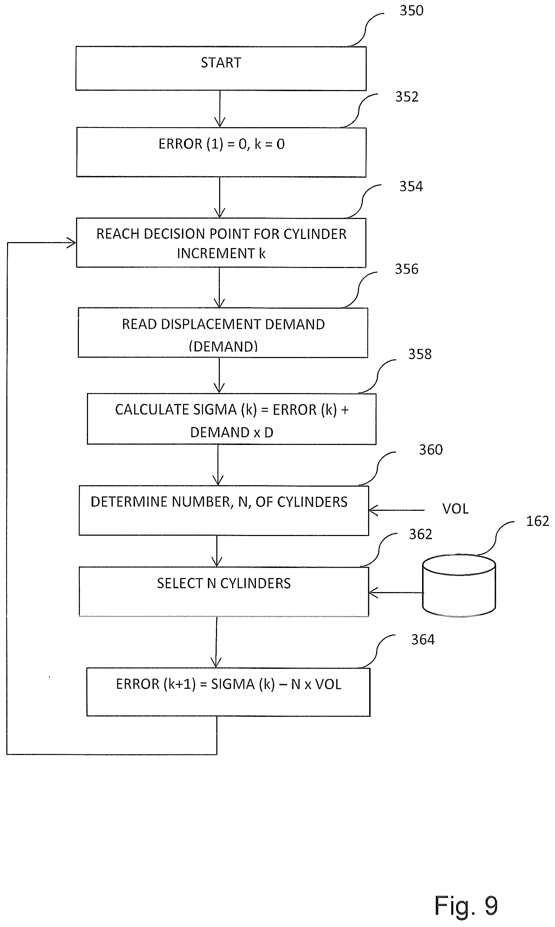

Figure 9 illustrates an alternative procedure which can be employed when there are redundant cylinders. In this case, the redundancy is two. As with the previous embodiment, once the procedure starts (350), an accumulated error value, Error(k), is set to zero (352). As the rotatable shaft rotates, it will reach (354) a decision point, however, because of the redundancy the decision point will be a decision for each of the cylinders in a set of cylinders. Accordingly, k is a count of the number of decision points, rather than cylinders in this embodiment. Accordingly at the decision point, the displacement demand (Demand) is read (356) and Sigma (k), being the sum of the accumulated error (Error (k)) and the displacement demanded from the cylinders in the set (i.e. Demand x D, in this case Demand x 2) is calculated (358). Sigma is expressed here as a percentage of the maximum displacement by an individual cylinder on an individual cycle of cylinder working volume and so Sigma (k) can exceed 100%. Typically, Sigma (k) will be in a range from zero to the product of the redundancy (C) and the volume of working fluid which can be displaced by a cylinder, or even more in some circumstances (for example if demand exceeded the maximum displacement of the hydraulic pump, or it had not been possible to fulfil the desired demand on the previous decision point, for example because some or all of the cylinders considered at the previous decision point were disabled). One skilled in the art will appreciate that displacement demand (Demand), Error (k), Sigma (k), VOL and Displacement (k) can each be expressed in any suitable units.

The pump controller then (360) determines the total number, N, of cylinders which are to be actuated at this decision point. To do this it takes into account the volume of working fluid which is to be displaced by individual cylinders (VOL). This is typically equal to the maximum volume which can be displaced by each cylinder, although as mentioned above, it is possible for part of the maximum displacement of a cylinder to be displaced during an active cycle.

At the next step N cylinders are then selected (362) to undergo an active cycle. This step is carried out with reference to the cylinder database (162). For example, database (162) is queried as to which cylinders are disabled, and so should therefore not be selected. Cylinders may be selected based on other criteria. For example, database (162) may contain data (165) specifying the number of times for which each cylinder has been selected to undertake an active cycle since it was installed or maintained or a counter was reset. The displacement determination algorithm may preferentially select cylinders which have been used least. The log as to how many times each cylinder has been selected to undergo an active cycle can then be updated. By this method, the use of cylinders is distributed amongst the cylinders, leading to more even wear than would otherwise be the case.

The N cylinders which have been selected are then caused to undergo active cycles by way of valve control signals. The next value of the accumulated error (Error (k+1)) is then set to Sigma (k) minus the total displacement of the N cylinders, typically N x VOL. Thus, Displacement (k) = N x VOL in this example.

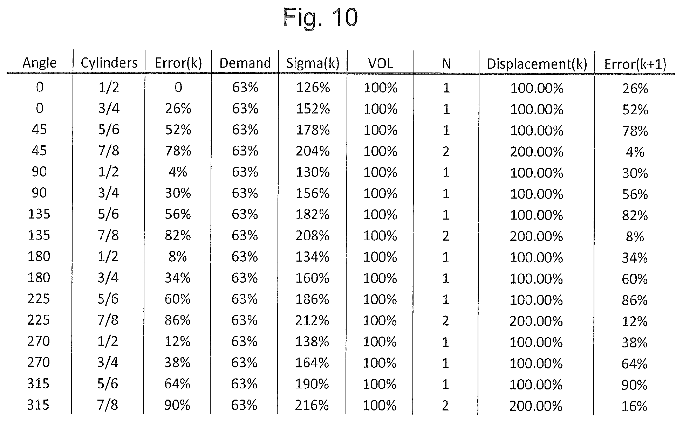

Figure 10 is a table illustrating the operation of this displacement determination algorithm. In the machine shown in Figure 8, having eight cylinders and two lobes, so that a decision point is reached for sets of two cylinders at once, every time the rotatable shaft is rotated by 45°. In this embodiment, Sigma (k) is incremented by 2 x the displacement demand, and this is then compared with the volume to be displaced by individual cylinders. Where Sigma (k) is less than VOL, it is determined that N will be 0. Where Sigma (k) is greater than VOL it is determined that N will equal 1, and where Sigma (k) is greater than double VOL, it is determined that N will be 2. The resulting displacement of the N cylinders (= N x VOL) which are selected is then subtracted from Sigma (k), giving the value of Error (k+1) which is carried forward to the next decision point. In each case, when there is one cylinder which is selected, there is a choice as to which of two opposing cylinders may carry out the active cycle. This may be selected for any desired reason. For example, the cylinder which is being used least may be selected.

Accordingly, the invention provides an efficient displacement determination algorithm for selecting the displacement of individual cylinders of the hydraulic pump and/or the hydraulic motor during operation. The displacement determination algorithm enables displacement to be accurately matched to demand.

In the examples shown herein, Error (k) is a simple numerical value which is incremented by the requested displacement, and decremented by the selected displacement, However, in an alternative embodiment, the sum of successive displacement demands may be accumulated in a first variable Accumulated Demand (k), and the sum of selected displacements (Displacement (k)) may be accumulated in a second variable Accumulated Displacement (k), and the difference between the turn determined may be compared with a threshold. It is not essential that the accumulated displacement demand and the accumulated displacement are reflected perfectly. For example, the displacement determination algorithm might only consider the difference between the requested displacement and the determined displacement for a limited number of preceding cycles (e.g. 100 or 1,000 cycles of cylinder working volume).

In these examples, the volume of working fluid to be displaced by each cylinder is determined before determining whether or not one or more cylinders should undergo an active cycle. However, this is not essential and where the volume of working fluid displaced may be the only maximum volume that can be displaced, this might be determined at the same time, or after, determining whether one or more cylinders should undergo active cycles.

In this example, the hydraulic motor has a cam with a single lobe, without any cylinder redundancy, and the hydraulic pump has a cam with multiple lobes and cylinder redundancy, simply for the purposes of illustration. In practice, either or both may have multiple lobes and/or a redundancy of greater than one.

Although the example embodiment has been illustrated with respect to a hydraulic transmission in a wind turbine generator, the hydraulic transmission can equally be applied in other types of machine. For example, the hydraulic transmission might be employed in a vehicle, in which the hydraulic pump is driven by an electrical or internal combustion motor, and there are a plurality of hydraulic motors, each of which drives a load, such as a wheel, or another hydraulic actuator (for example, a hydraulically operated tool, in the case of a hydraulic excavator).

Further variations and modifications may be made within the scope of the invention herein disclosed.

### List of Features

- 1: Wind turbine generator
- 2: Variable pitch turbine
- 4: Synchronous electrical generator
- 6: 3-phase grid
- 8: Hydraulic transmission
- 10: Variable displacement hydraulic pump
- 12: Turbine draft shaft
- 14: Variable displacement hydraulic motor
- 16: Generator drive shaft
- 18: Pressurised fluid manifold
- 20: Oleopneumatic accumulator
- 26: Low pressure manifold
- 28: Reservoir tank
- 30: Transmission controller
- 32: Displacement demand (Demand) control signal for hydraulic pump
- 34: Displacement demand (Demand) control signal for hydraulic motor
- 100: Cylinders
- 102: Cylinder working volume
- 104: Pistons
- 106: Rotatable shaft
- 108: Eccentric cam
- 110: Shaft position and speed sensor
- 111: Signal line
- 112: Motor controller
- 114: Poppet valves (low pressure valves)
- 115: Low pressure conduit
- 117: Low pressure line
- 118: Low pressure valve control line
- 120: High pressure valves
- 122: High pressure line
- 124: High pressure port
- 126: High pressure valve control lines
- 128: Pressure relief valve
- 150: Processor
- 152: Bus
- 154: Memory
- 156: Input-output port
- 158: Program
- 160: Variables (including Error (k))
- 162: Database of data concerning each cylinder
- 163: Data concerning angular position of each cylinder
- 164: Data concerning whether each cylinder is disabled
- 165: Data being number of times each cylinder has undergone an active cycle
- 166: Shaft position signal
- 168: Measurement of pressure
- 200: Step of receiving input signals
- 202: Step of determining target torque
- 204: Step of calculating pump displacement demand (Demand)
- 206: Step of calculating motor displacement demand (Demand)
- 300: Step of procedure beginning
- 302: Step of setting Error (1) to zero
- 304: Step of reaching decision point
- 306: Step of reading request motor displacement
- 308: Step of calculating Sigma (k)
- 310: Step of checking status
- 312: Comparison step
- 314: Step of setting displacement
- 316: Step of setting displacement to zero
- 318: Step of updating Error (k) to obtain Error (k+1)
- 350: Step of procedure starting
- 352: Step of setting Error (1) to zero
- 354: Step of reaching decision point for each cylinder in a set of cylinders
- 356: Step of reading requested displacement
- 358: Step of calculating Sigma (k)
- 360: Step of determining number of cylinders, N.
- 362: Step of selecting N cylinders
- 364: Step of updating Error (k) to obtain Error (k+1)

## Claims

1. A hydraulic transmission (8), comprising:
a variable displacement hydraulic pump (10),
a variable displacement hydraulic motor (14),
a drive shaft (16) coupled to the hydraulic pump, for driving the hydraulic pump, and an output (12) coupled to the hydraulic motor, for coupling to a load,
wherein at least one of the hydraulic pump and the hydraulic motor comprises:
a rotatable shaft (106), a shaft position sensor (110) which senses the angular position of the rotatable shaft;
at least one ring cam (108) having one or more lobes,
a plurality of cylinders (102) arranged around the rotatable shaft and having working volumes (102) which vary cyclically with rotation of the rotatable shaft,
a low pressure working fluid line (117) and a high pressure working fluid line (122),
a plurality of valves (114, 120) regulating the flow of working fluid between each said cylinder and the low and high pressure working fluid lines, at least one said valve associated with each cylinder being an electronically controlled valve,
a controller (30) configured to actively control the said electronically controlled valves to thereby determine the net displacement of working fluid by each cylinder on each cycle of cylinder working volume,
wherein the controller is configured to repeatedly execute a displacement determination algorithm, when the rotatable shaft is at angularly spaced positions, to thereby determine the net displacement of working fluid by each cylinder on each cycle of cylinder working volume,
**characterised in that** the algorithm takes into account a displacement demand (Demand), and the difference between previous values of the displacement demand (Demand) and previous net displacements determined by the controller (Displacement(k)), to match the time averaged net displacement of working fluid by the cylinders to the time averaged displacement represented by the displacement demand (Demand).

2. A hydraulic transmission according to claim 1, wherein the controller stores a displacement error value (Error(k)) and execution of the displacement determination algorithm takes into account the stored displacement error value and updates the displacement error value by adding the displacement demand (Demand) and subtracting the net displacement of working fluid determined during execution of the displacement determination algorithm (Displacement (k)).

3. A hydraulic transmission according to claim 1, wherein the controller stores an accumulated displacement value (Accumulated Displacement (k)) representative of previously determined net displacements of working fluid by the one or more cylinders and updates the accumulated displacement value by adding the displacement determined by execution of the displacement determination algorithm (Displacement(k)),
and wherein the controller stores an accumulated displacement demand value (Accumulated Demand (k)), and updates the accumulated displacement demand value by adding the displacement represented by the displacement demand (Demand),
wherein execution of the displacement determination algorithm takes into account the difference between the accumulated displacement value (Accumulated Displacement (k)) and the accumulated displacement demand value (Accumulated Demand (k)).

4. A hydraulic transmission according to claim 1, wherein at least one ring cam has a plurality of lobes and some or all of the plurality of cylinders form a group of cylinders which are in driving relationship with the same ring cam, wherein for each of the group of cylinders, there is at least one other cylinder in the said group of cylinders having substantially the same working volume throughout cycles of cylinder working volume.

5. A hydraulic transmission according to claim 4, wherein the number of cylinders having substantially the same working volume throughout cycles of cylinder working volume (the redundancy, C) is the greatest common divisor of the number of cylinders (A) and the number of lobes of the ring cam (B).

6. A hydraulic transmission according to claim 4, wherein the group of cylinders are a bank of cylinders which are in driving relationship with the same ring cam through ring cam following elements which are at substantially the same axial position.

7. A hydraulic transmission according to claim 4, wherein the plurality of cylinders comprises a plurality of banks of cylinders, each bank of cylinders being in driving relationship with a ring cam through ring cam following elements which are at substantially the same axial position, each bank of cylinders being independently controlled.

8. A hydraulic transmission according to claim 7, wherein the plurality of banks of cylinders are in each in driving relationship with a different ring cam, each ring cam being coupled to the rotating shaft.

9. A hydraulic transmission according to claim 4, wherein the displacement determination algorithm is executed a plurality of times between decision points, being times by when displacement decisions concerning the net displacement of working fluid by one or more cylinders must be made in order to determine whether the respective one or more cylinders execute active cycles in which they make a net displacement of working fluid or inactive cycles in which they make no net displacement of working fluid, to sequentially determine the net displacement of working fluid by each of a plurality of cylinders having substantially the same volume throughout cycles of cylinder working volume.

10. A hydraulic transmission according to claim 4, wherein the displacement determination algorithm first determines the number of a set of cylinders which have substantially the same volume throughout cycles of cylinder working volume that should undergo active cycles in which there is a net displacement of working fluid at substantially the same time and then determines the net displacement of working fluid in the next cycle of cylinder working volume of each of the cylinders in the set.

11. A hydraulic transmission according to claim 10, wherein the displacement determination algorithm determines which of the cylinders in the set should undergo an active cycle in which they make a net displacement of working fluid, thereby determining the net displacement of working fluid in the next cycle of cylinder volume by each of the cylinders in the set.

12. A hydraulic transmission according to claim 1, wherein the controller is configured to take into account whether a cylinder is disabled when determining the net displacement of the respective cylinder.

13. A hydraulic transmission according to claim 11, wherein the step of determining which of the cylinders in the set should undergo an active cycle takes into account one or more of: whether a cylinder is disabled, reducing side load on the bearings which support the rotating shaft or distributing load between the cylinders.

14. A wind turbine generator comprising a hydraulic transmission according to claim 1, a plurality of turbine blades mounted to a hub, the hub coupled to the drive shaft, and an electricity generator coupled to the output shaft.

15. A method of operating a hydraulic pump or a hydraulic motor in a hydraulic transmission, the hydraulic transmission comprising:
a variable displacement hydraulic pump,
a variable displacement hydraulic motor,
a drive shaft coupled to the hydraulic pump, for driving the hydraulic pump, and
an output shaft coupled to the hydraulic motor, for coupling to a load,
wherein at least one of the hydraulic pump and the hydraulic motor comprises:
a rotatable shaft,
a shaft position sensor which senses the angular position of the rotatable shaft;
at least one ring cam having one or more lobes,
a plurality of cylinders arranged around the rotatable shaft and having working volumes which vary cyclically with rotation of the rotatable shaft,
a low pressure working fluid line and a high pressure working fluid line,
a plurality of valves regulating the flow of working fluid between each cylinder and the low and high pressure working fluid lines, at least one said valve associated with each cylinder being an electronically controlled valve, wherein the said at least one of a hydraulic pump and a hydraulic motor is operated by actively controlling the said electronically controlled valves to thereby determine the net displacement of working fluid by each cylinder on each cycle of cylinder working volume, and wherein a controller repeatedly executes a displacement determination algorithm, when the shaft is at angularly spaced positions, thereby determining the net displacement of working fluid by each cylinder on each cycle of cylinder working volume,
**characterized in that** the displacement determination algorithm takes into account a displacement demand (Demand), and the difference between previous values of the displacement demand (Demand) and previously determined net displacements of working fluid by each cylinder (Displacement(k)), to match the time averaged net displacement of working fluid by the cylinders to the time averaged displacement represented by the displacement demand (Demand).

## Patentansprüche

1. Hydraulikgetriebe (8), umfassend:
eine hydraulische Verstellpumpe (10),
einen Hydraulikmotor mit variabler Verdrängung (14),
eine Antriebswelle (16), die mit der Hydraulikpumpe gekoppelt ist, um die Hydraulikpumpe anzutreiben, und einen Ausgang (12), der mit dem Hydraulikmotor gekoppelt ist, um eine Last zu koppeln,
wobei mindestens entweder die Hydraulikpumpe oder der Hydraulikmotor umfassen:
eine drehbare Welle (106), einen Wellenpositionssensor (110), der die Winkelposition der drehbaren Welle misst;
mindestens ein Ringnockenelement (108) mit einem oder mehreren Nocken,
mehrere Zylinder (102), die um die drehbare Welle angeordnet sind und Arbeitsvolumina (102) aufweisen, die zyklisch mit der Drehung der drehbaren Welle variieren, eine Niederdruck-Arbeitsfluidleitung (117) und eine Hochdruck-Arbeitsfluidleitung (122),
mehrere Ventile (114, 120) zur Regelung der Strömung des Arbeitsfluids zwischen jedem der Zylinder und den Nieder- und Hochdruck-Arbeitsfluidleitungen, wobei mindestens eines der Ventile, das mit jedem Zylinder verknüpft ist, ein elektronisch geregeltes Ventil ist,
eine Steuerung (30), die zum aktiven Steuern der elektronisch geregelten Ventile konfiguriert ist, um so die Nettoverdrängung des Arbeitsfluids durch jeden Zylinder in jedem Zyklus des Zylinderarbeitsvolumens zu bestimmen,
wobei die Steuerung zum wiederholten Ausführen eines Algorithmus zur Bestimmung der Verdrängung konfiguriert ist, wenn sich die drehbare Welle an im Winkel beabstandeten Positionen befindet, um so die Nettoverdrängung des Arbeitsfluids durch jeden Zylinder in jedem Zyklus des Zylinderarbeitsvolumens zu bestimmen,
**dadurch gekennzeichnet, dass**
der Algorithmus einen Verdrängungsbedarf (Bedarf) berücksichtigt und der Unterschied zwischen vorherigen Werten des Verdrängungsbedarfs (Bedarf) und vorherigen Nettoverdrängungen durch die Steuerung (Verdrängung (k)) bestimmt wird, um die zeitgemittelte Nettoverdrängung von Arbeitsfluid durch die Zylinder an die zeitgemittelte Verdrängung, die vom Verdrängungsbedarf (Bedarf) repräsentiert wird, anzugleichen.

2. Hydraulikgetriebe nach Anspruch 1, wobei die Steuerung einen Verdrängungsfehlerwert (Error (k)) speichert und die Ausführung des Verdrängungsbestimmungsalgorithmus den gespeicherten Verdrängungsfehlerwert berücksichtigt und den Verdrängungsfehlerwert durch Addieren des Verdrängungsbedarfs (Bedarf) und Subtrahieren der Nettoverdrängung des Arbeitsfluids, die während der Ausführung des Verdrängungsbestimmungsalgorithmus (Verdrängung (k)) bestimmt wird, aktualisiert.

3. Hydraulikgetriebe nach Anspruch 1, wobei die Steuerung einen akkumulierten Verdrängungswert (akkumulierte Verdrängung (k)), welche die zuvor bestimmten Nettoverdrängungen des Arbeitsfluids durch den einen oder die mehreren Zylinder repräsentiert, speichert, und den akkumulierten Verdrängungswert durch Addieren der Verdrängung, die durch Ausführung des Verdrängungsbestimmungsalgorithmus (Verdrängung (k)) bestimmt wird, aktualisiert,
und wobei die Steuerung einen akkumulierten Verdrängungsbedarfswert (akkumulierte Anforderung (k)) speichert und den akkumulierten Verdrängungsbedarfswert durch Addieren der Verdrängung, die vom Verdrängungsbedarf (Bedarf) repräsentiert wird, aktualisiert,
wobei die Ausführung des Verdrängungsbestimmungsalgorithmus die Differenz zwischen dem akkumulierten Verdrängungswert (akkumulierte Verdrängung (k)) und dem akkumulierten Verdrängungsbedarfswert (akkumulierter Bedarf (k)) berücksichtigt.

4. Hydraulikgetriebe nach Anspruch 1, wobei mindestens ein Ringnockenelement mehrere Nocken aufweist und einige oder alle der mehreren Zylinder eine Zylindergruppe bilden, die in angetriebener Beziehung zu dem Ringnockenelement stehen, wobei für jede Zylindergruppe mindestens ein anderer Zylinder in der Zylindergruppe vorliegt, der im Wesentlichen das gleiche Arbeitsvolumen während der Zyklen des Zylinderarbeitsvolumens aufweist.

5. Hydraulikgetriebe nach Anspruch 4, wobei die Zahl der Zylinder, die im Wesentlichen das gleiche Arbeitsvolumen während der Zyklen des Zylinderarbeitsvolumens (Redundanz, C) aufweist, der größte gemeinsame Teiler der Anzahl der Zylinder (A) und der Anzahl der Nocken des Ringnockenelements (B) ist.

6. Hydraulikgetriebe nach Anspruch 4, wobei die Zylindergruppe eine Zylinderreihe ist, die in angetriebener Beziehung zu dem gleichen Ringnockenelement durch Ringnocken-Folgerelemente steht, die sich im Wesentlichen an der gleichen axialen Position befinden.

7. Hydraulikgetriebe nach Anspruch 4, wobei die mehreren Zylinder mehrere Zylinderreihen umfassen, wobei jede Zylinderreihe in angetriebener Beziehung mit einem Ringnockenelement über Ringnocken-Folgerelemente steht, die sich an der im Wesentlichen gleichen axialen Position befinden, wobei jede Zylinderreihe unabhängig voneinander gesteuert wird.

8. Hydraulikgetriebe nach Anspruch 7, wobei die mehreren Zylinderreihen jeweils in Antriebsbeziehung mit einem anderen Ringnockenelement stehen, wobei jedes Ringnockenelement mit der Drehwelle gekoppelt ist.

9. Hydraulikgetriebe nach Anspruch 4, wobei der Verdrängungsbestimmungsalgorithmus mehrere Male zwischen Entscheidungspunkten ausgeführt wird, wobei die Male dann vorliegen, wenn die Verdrängungsentscheidungen betreffend die Nettoverdrängung des Arbeitsfluids durch einen oder mehrere Zylinder durchzuführen sind, um zu bestimmen, ob der zugehörige eine oder mehrere Zylinder aktive Zyklen ausführen, bei denen sie eine Nettoverdrängung des Arbeitsfluids durchführen oder inaktive Zyklen sind, bei denen keine Nettoverdrängung des Arbeitsfluids durchgeführt wird, um die Nettoverdrängung des Arbeitsfluids jedes von mehreren Zylindern sequentiell zu bestimmen, die im Wesentlichen das gleiche Volumen während der Zyklen des Zylinderarbeitsfluids aufweisen.

10. Hydraulikgetriebe nach Anspruch 4, wobei der Verdrängungsbestimmungsalgorithmus zuerst die Anzahl eines Zylindersatzes bestimmt, der im Wesentlichen das gleiche Volumen während der Zyklen des Zylinderarbeitsvolumens aufweist, die aktive Zyklen durchlaufen sollte, wobei eine Nettoverdrängung von Arbeitsfluid zur im Wesentlichen gleichen Zeit vorliegt, und dann die Nettoverdrängung von Arbeitsfluid in dem nächsten Zyklus des Zylinderarbeitsvolumens jedes der Zylinder in dem Satz bestimmt wird.

11. Hydraulikgetriebe nach Anspruch 10, wobei der Verdrängungsbestimmungsalgorithmus bestimmt, welcher der Zylinder in dem Satz einen aktiven Zyklus durchlaufen sollte, indem sie eine Nettoverdrängung von Arbeitsfluid durchlaufen, um dadurch die Nettoverdrängung des Arbeitsfluids im nächsten Zyklus des Zylindervolumens durch jeden der Zylinder in dem Satz zu bestimmen.

12. Hydraulikgetriebe nach Anspruch 1, wobei die Steuerung konfiguriert ist, um zu berücksichtigen, ob ein Zylinder deaktiviert wurde, wenn die Nettoverdrängung des zugehörigen Zylinders bestimmt wird.

13. Hydraulikgetriebe nach Anspruch 11, wobei der Schritt des
Bestimmens, welcher der Zylinder in dem Satz einen aktiven Zyklus durchlaufen sollte, eines oder mehrere von Folgenden berücksichtigt: ein Zylinder ist deaktiviert, Reduzieren der Seitenlast auf die Lager, welche die Drehwelle tragen oder Verteilen der Last zwischen den Zylindern.

14. Windturbinengenerator, umfassend ein Hydraulikgetriebe nach Anspruch 1, wobei mehrere Turbinenschaufeln an einer Nabe montiert sind, wobei die Nabe mit der Antriebswelle gekoppelt ist und ein Stromgenerator mit der Ausgangswelle gekoppelt ist.

15. Verfahren zum Betrieb einer Hydraulikpumpe oder eines Hydraulikmotors in einem Hydraulikgetriebe, wobei das Hydraulikgetriebe umfasst:
eine hydraulische Verstellpumpe,
einen Hydraulikmotor mit variabler Verdrängung,
eine Antriebswelle, die mit der Hydraulikpumpe gekoppelt ist, um die Hydraulikpumpe anzutreiben, und
eine Ausgangswelle, die mit dem Hydraulikmotor gekoppelt ist, um mit einer Last zu koppeln,
wobei mindestens die Hydraulikpumpe oder der Hydraulikmotor umfasst: eine Drehwelle,
einen Wellenpositionssensor, der die Winkelposition der Drehwelle misst;
mindestens ein Ringnockenelement mit einem oder mehreren Nocken,
eine Vielzahl von Rollen, die um die Drehwelle angeordnet werden und Arbeitsvolumina aufweisen, die zyklisch mit der Drehung der Drehwelle variieren,
eine Niederdruck-Arbeitsfluidleitung und eine Hochdruck-Arbeitsfluidleitung,
mehrere Ventile zur Regelung der Strömung des Arbeitsfluids zwischen jedem Zylinder und den Nieder- und Hochdruck-Arbeitsfluidleitungen, wobei mindestens eines der Ventile, das mit jedem Zylinder verknüpft ist, ein elektronisch geregeltes Ventil ist,
wobei mindestens entweder eine Hydraulikpumpe oder ein Hydraulikmotor durch aktives Steuern der elektronisch gesteuerten Ventile betrieben wird, um so die Nettoverdrängung von Arbeitsfluid durch jeden Zylinder in jedem Zyklus des Zylinderarbeitsvolumens zu bestimmen, wobei eine Steuerung einen Verdrängungsbestimmungsalgorithmus wiederholt ausführt, wenn sich die Welle an im Winkel beabstandeten Positionen befindet, wodurch die Nettoverdrängung von Arbeitsfluid durch jeden Zylinder in jedem Zyklus des Zylinderarbeitsvolumens bestimmt wird,
**dadurch gekennzeichnet, dass**
der Verdrängungsbestimmungsalgorithmus einen Verdrängungsbedarf (Bedarf) berücksichtigt und der Unterschied zwischen vorherigen Werten des Verdrängungsbedarfs (Bedarf) und zuvor bestimmten Nettoverdrängungen des Arbeitsfluids durch jeden Zylinder (Verdrängung (k)) bestimmt wird, um die zeitgemittelte Nettoverdrängung von Arbeitsfluid durch die Zylinder an die zeitgemittelte Verdrängung, die von dem Verdrängungsbedarf (Bedarf) repräsentiert wird, anzugleichen.

## Revendications

1. Transmission hydraulique (8) comprenant :
une pompe hydraulique à cylindrée variable (10),
un moteur hydraulique à cylindrée variable (14),
un arbre d'entraînement (16) accouplé à la pompe hydraulique, pour entraîner la pompe hydraulique,
et une sortie (12) accouplé au moteur hydraulique, destiné à être accouplé à une charge,
dans laquelle au moins soit la pompe hydraulique, soit le moteur hydraulique comprend :
un arbre rotatif (106),
un détecteur de position d'arbre (110) qui détecte la position angulaire de l'arbre rotatif,
au moins une came annulaire (108) ayant un ou plusieurs lobes,
une pluralité de cylindres (102) disposés autour de l'arbre rotatif et ayant des volumes de travail (102) qui varient cycliquement avec la rotation de l'arbre rotatif,
une conduite de fluide de travail basse pression (117) et une conduite de fluide de travail haute pression (122),
une pluralité de soupapes (114, 120) régulant l'écoulement du fluide de travail entre chaque dit cylindre et les conduites de fluide de travail basse et haute pression, au moins une dite soupape associée à chaque cylindre étant une soupape commandée électroniquement,
un contrôleur (30) configuré de façon à commander activement lesdites soupapes commandées électroniquement pour déterminer ainsi le déplacement net du fluide de travail par chaque cylindre sur chaque cycle de volume de travail de cylindre,
ce contrôleur étant configuré de façon à exécuter de façon répétée un algorithme de détermination du déplacement, lorsque l'arbre rotatif est dans des positions espacées angulairement, pour déterminer ainsi le déplacement net du fluide de travail par chaque cylindre sur chaque cycle de volume de travail de cylindre,
**caractérisée en ce que**
cet algorithme tient compte d'une demande de déplacement (Demande) et de la différence entre les valeurs antérieures de la demande de déplacement (Demande) et les déplacements nets antérieurs déterminés par le contrôleur (Déplacement(k)) pour faire correspondre le déplacement net moyenné dans le temps du fluide de travail par les cylindres avec le déplacement moyenné dans le temps représenté par la demande de déplacement (Demande).

2. Transmission hydraulique selon la revendication 1, dans laquelle le contrôleur stocke une valeur d'erreur de déplacement (Erreur(k)) et l'exécution de l'algorithme de détermination du déplacement tient compte de la valeur de l'erreur de déplacement stockée et met à jour la valeur de l'erreur de déplacement en additionnant la demande de déplacement (Demande) et en soustrayant le déplacement net du fluide de travail déterminé lors de l'exécution de l'algorithme de détermination du déplacement (Déplacement (k)).

3. Transmission hydraulique selon la revendication 1, dans laquelle le contrôleur stocke une valeur de déplacement accumulé (Déplacement accumulé (k)) représentative des déplacements nets déterminés antérieurement du fluide de travail par le ou les cylindres et met à jour cette valeur de déplacement accumulé en additionnant le déplacement déterminé par l'exécution de l'algorithme de détermination du déplacement (Déplacement (k)),
et dans laquelle le contrôleur stocke une valeur de demande de déplacement accumulée (Demande accumulée (k)), et met à jour la valeur de demande de déplacement accumulée en additionnant le déplacement représenté par la demande de déplacement (Demande),
dans laquelle l'exécution de l'algorithme de détermination du déplacement tient compte de la différence entre la valeur du déplacement accumulé (Déplacement accumulé (k)) et la valeur de la demande de déplacement accumulée (Demande accumulée (k)).

4. Transmission hydraulique selon la revendication 1, dans laquelle au moins une came annulaire a une pluralité de lobes et quelques-uns ou la totalité de la pluralité de cylindres forment un groupe de cylindres qui sont dans un rapport d'entraînement avec la même came annulaire, dans laquelle pour chacun de ce groupe de cylindres, il y a au moins un autre cylindre dans ledit groupe de cylindres qui a essentiellement le même volume de travail sur tous les cycles de volume de travail de cylindre.

5. Transmission hydraulique selon la revendication 4, dans laquelle le nombre de cylindres qui ont essentiellement le même volume de travail sur tous les cycles de volume de travail de cylindre (la redondance, C) est le plus grand commun diviseur du nombre de cylindres (A) et du nombre de lobes de la came annulaire (B).

6. Transmission hydraulique selon la revendication 4, dans laquelle le groupe de cylindres sont une rangée de cylindres qui sont dans un rapport d'entraînement avec la même came annulaire grâce à des éléments suiveurs de came annulaire qui sont essentiellement dans la même position axiale.

7. Transmission hydraulique selon la revendication 4, dans laquelle la pluralité de cylindres comprend une pluralité de rangées de cylindres, chaque rangée de cylindres étant dans un rapport d'entraînement avec une came annulaire grâce à des éléments suiveurs de came annulaire qui sont essentiellement dans la même position axiale, chaque rangée de cylindres étant commandée indépendamment.

8. Transmission hydraulique selon la revendication 7, dans laquelle la pluralité de rangées de cylindres sont chacun dans un rapport d'entraînement avec une came annulaire différente, chaque came annulaire étant accouplée à l'arbre rotatif.

9. Transmission hydraulique selon la revendication 4, dans laquelle l'algorithme de détermination du déplacement est exécuté une pluralité de fois entre des points de décision, étant des moments auxquels des décisions de déplacement concernant le déplacement net du fluide de travail par un ou plusieurs cylindres doivent être prises afin de déterminer si le ou les cylindres respectifs exécutent des cycles actifs dans lesquels ils font un déplacement net du fluide de travail ou des cycles inactifs dans lesquels ils ne font aucun déplacement net du fluide de travail, afin déterminer séquentiellement le déplacement net du fluide de travail par chacun d'une pluralité de cylindres ayant essentiellement le même volume sur tous les cycles de volume de travail de cylindre.

10. Transmission hydraulique selon la revendication 4, dans laquelle l'algorithme de détermination du déplacement détermine tout d'abord le nombre d'un ensemble de cylindres qui ont essentiellement le même volume sur tous les cycles de volume de travail de cylindre qui devraient passer par des cycles actifs dans lesquels il y a un déplacement net du fluide de travail à essentiellement le même moment, puis détermine le déplacement net du fluide de travail dans le cycle suivant de volume de travail de cylindre de chacun des cylindres dans l'ensemble.

11. Transmission hydraulique selon la revendication 10, dans laquelle l'algorithme de détermination du déplacement détermine lequel des cylindres dans l'ensemble devait passer par un cycle actif dans lequel ils font un déplacement net du fluide de travail, déterminant ainsi le déplacement net du fluide de travail dans le cycle suivant de volume de cylindre par chacun des cylindres dans l'ensemble.

12. Transmission hydraulique selon la revendication 1, dans laquelle le contrôleur est configuré de façon à tenir compte de si un cylindre est désactivé lorsqu'il détermine le déplacement net du cylindre respectif.

13. Transmission hydraulique selon la revendication 11, dans laquelle l'étape de détermination duquel cylindre dans l'ensemble devrait passer par un cycle actif tient compte d'un ou de plusieurs des aspects suivants : si oui ou non un cylindre est désactivé, réduisant la charge latérale sur les paliers qui supportent l'arbre rotatif ou répartissant la charge entre les cylindres.

14. Aérogénérateur comprenant une transmission hydraulique selon la revendication 1, une pluralité d'aubes de turbine montées sur un moyeu, ce moyeu étant accouplé à l'arbre d'entraînement, et un générateur d'électricité accouplé à l'arbre de sortie.

15. Procédé d'utilisation d'une pompe hydraulique ou d'un moteur hydraulique dans une transmission hydraulique, cette transmission hydraulique comprenant :
une pompe hydraulique à cylindrée variable,
un moteur hydraulique à cylindrée variable,
un arbre d'entraînement accouplé à la pompe hydraulique, pour entraîner la pompe hydraulique, et
et un arbre de sortie accouplé au moteur hydraulique, destiné à être accouplé à une charge,
dans lequel au moins soit la pompe hydraulique,
soit le moteur hydraulique comprend :
un arbre rotatif,
un détecteur de position d'arbre qui détecte la position angulaire de l'arbre rotatif,
au moins une came annulaire ayant un ou plusieurs lobes,
une pluralité de cylindres disposés autour de l'arbre rotatif et ayant des volumes de travail qui varient cycliquement avec la rotation de l'arbre rotatif,
une conduite de fluide de travail basse pression et une conduite de fluide de travail haute pression,
une pluralité de soupapes régulant l'écoulement du fluide de travail entre chaque dit cylindre et les conduites de fluide de travail basse et haute pression, au moins une dite soupape associée à chaque cylindre étant une soupape commandée électroniquement,
dans lequel soit ladite pompe hydraulique, soit ledit moteur hydraulique est actionné en commandant activement lesdites soupapes commandées électroniquement pour déterminer ainsi le déplacement net du fluide de travail par chaque cylindre sur chaque cycle de volume de travail de cylindre, et dans lequel un contrôleur exécute de façon répétée un algorithme de détermination du déplacement, lorsque l'arbre est dans des positions espacées angulairement, déterminant ainsi le déplacement net de fluide de travail par chaque cylindre sur chaque cycle de volume de travail de cylindre,
**caractérisé en ce que**
cet algorithme de détermination du déplacement tient compte de la demande de déplacement (Demande) et de la différence entre les valeurs antérieures de la demande de déplacement (Demande) et les déplacements nets déterminés antérieurement du fluide de travail par chaque cylindre (Déplacement (k)) pour faire correspondre le déplacement net moyenné dans le temps du fluide de travail par les cylindres avec le déplacement moyenné dans le temps représenté par la demande de déplacement (Demande).
